# EUROPEAN PATENT SPECIFICATION

(11) **EP 4 180 784 B1**
(45) Date of publication and mention of the grant of the patent: **19.06.2024**
(21) Application number: 21207427.2
(22) Date of filing: 10.11.2021
(51) Int. Cl.: G01K 1/08, G01K 1/18, G01K 13/02, G01K 1/14

(54) **MEASURING INSERT FOR A THERMOMETER**
MESSEINSATZ FÜR THERMOMETER
INSERT DE MESURE POUR UN THERMOMÈTRE

(43) Date of publication of application: 17.05.2023
(73) Proprietor: Endress+Hauser Wetzer GmbH+Co. KG, 87484 Nesselwang (DE)
(72) Inventor: Fortunato, Gianluca, 20153 Milano (IT); Pietroni, Michele, 20097 S. Donato (IT); Eralti, Davide, 20854 Vedano Al Lambro (IT); Tagliabue, Davide, 20037 Paderno Dugnano (IT); Micieli, Andrea, 20052 Vignate (IT); Mornhinweg, Markus, 86911 Diessen (DE)
(74) Representative: Koslowski, Christine Adelheid

(56) References cited:
- EP-A1- 3 264 059
- WO-A1-2014/158393
- DE-A1- 2 533 632
- US-A1- 2021 270 679

## Description

The present invention is concerned with a measuring insert for determining and/or monitoring a temperature of a medium in a vessel or pipe, which can be inserted into a protective tube for accommodating the measuring insert, the protective tube at least partially protruding into an inner volume of the vessel or pipe. The measuring insert comprises an elongated tubular member and a temperature sensor located in an inner volume of the tubular member. The temperature sensor e.g. comprises a thermocouple or a resistive element. The present invention is further concerned with an apparatus, especially a thermometer, for determining and/or monitoring a temperature of a medium in a vessel or pipe comprising such a measuring insert.

Thermometers have become known from the state of the art in a wide variety of designs. For example, there are thermometers that use the expansion of a liquid, a gas or a solid with a known coefficient of expansion to measure the temperature. Other thermometers associate the electrical conductivity of a material with the temperature, for example when resistance elements or thermocouples are used. Pyrometers, on the other hand, use the heat radiation of a substance to determine its temperature. The respective underlying measuring principles have each been described in a large number of publications.

A temperature sensor in the form of a resistive element or a so-called thin-film sensor, in particular a resistance temperature detector (RTD), for example, uses a sensor element provided with connecting wires and applied to a carrier substrate, whereby the rear side of the carrier substrate is usually metallically coated. The sensor elements used are so-called resistor elements, which are given for example by platinum elements, which are also commercially available as PT10, PT100, and PT1000 elements.

In case of thermocouple in turn the temperature is determined by means of a thermoelectric voltage occurring between the thermocouple wires connected at one end and consisting of different materials. For temperature measurement, commonly thermocouples according to DIN standard IES584, for example thermocouples of type K, J, N, S, R, B, T, or E, are used as temperature sensors. But other material pairs, especially those with a measurable Seebeck effect, are also possible.

Often, temperature sensors are arranged in a measuring insert which in turn is brought into contact with the medium via a protective tube in the form of a thermowell, the protective tube being in physical contact with the fluid.

On the one hand, such thermowells are subject to high loads, in particular when they are exposed to a flowing medium which causes different mechanical forces acting on the protective tube, e. g. shear forces or forces induced by coherent vortex shedding which can result in vortex induced vibrations (VIV). Vortex shedding in fluid dynamics is known as "Kármán vortex street" and refers to a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates.

Moreover, the measuring accuracy of a thermometer is highly dependent on thermal couplings between the respective medium, the process environment and/or the thermometer. In this manner, the prevailing heat flows play a decisive role. A reliable determination of the temperature requires that the thermometer and the medium are in thermal equilibrium for at least a period of time required to determine the temperature. At least for this period of time the temperature of the thermometer and that of the medium therefore should be ideally essentially the same. The reaction of a thermometer to a change in temperature, i.e. the so-called response time of the thermometer, plays a decisive role here, especially if the temperature of the medium changes substantially continuously. That way, another problem frequently associated with thermometers comprising a thermowell are related to the response time.

Many different solutions have been presented to reduce the response time and to increase the measuring accuracy of thermometers comprising thermowells. Often, walls of the protective tube are made as small as possible.

Another approach relates to improvements of contacts between the measuring insert and thermowell. In this context DE102013114140A1 or DE102014101968A1 e.g. describe the use of additional spring elements to improve the contact between the protection tube and the measuring insert. DE 102018111167A1 in turn suggests a coupling unit positioned between the measuring insert and thermowell. WO2014/158393A1 discloses a solid insert configured to removably support the temperature probe within the thermowell and to provide a thermal contact between thermowell and probe.

Based on the known solutions it is an object of the present invention to provide a measuring insert for use with a thermowell with improved performance This object is achieved by the measuring insert according to claim 1 and by the thermometer according to claim 8.

Regarding the measuring insert, the object underlying the present invention is achieved by for determining and/or monitoring a temperature of a medium in a vessel or pipe, which can be inserted into a protective tube for accommodating the measuring insert, the protective tube at least partially protruding into an inner volume of the vessel or pipe. The measuring insert comprises an elongated tubular member comprising a first and a second section, and at least one temperature sensor located in an inner volume of the second section of the elongated tube member, wherein the second section comprises a tubular base body, and wherein the base body is connectable to the first section of the elongated tubular member, wherein the second section is at least partially embodied and/or dimensioned so as to serve for fixing the measuring insert inside the protective tube in a state in which the measuring insert is introduced into the protective tube.

The elongated tubular member e.g. may further comprise connecting wires for establishing an electrical connection with the temperature sensor. Moreover, the elongated tubular member may be filled with a filling material. Preferably, the two sections of the elongated tubular member comprise a geometry adapted to each other, especially the tubular member has an inner bore extending from the first to the second section in which the temperature sensor and connecting wires are arranged.

The second section of the tubular member serves for increased mechanical stability of the measuring insert when the measuring insert is introduced into the protective tube. It further serves for reduced sensitivity against mechanical vibrations of the thermometer. By means of the measuring insert, a gap between an outer wall of the measuring insert and an inner wall of the protective tube is reduced.

The second section of the elongated tubular member may be connected with the fist section by means of a force-fit or form-fit connection. Preferably, the two sections are soldered to each other or fastened together by utilizing any other fastening or connection means.

In the context of the present invention, either the base body of the second section itself may be embodied and/or dimensioned so as to serve for fixing the measuring insert inside the protective tube in a state in which the measuring insert is introduced into the protective tube. However, it is also of advantage, if the second section further comprises a coupling element arranged on an outer surface of the tubular base body. It is further of advantage, if the coupling element is embodied and/or dimensioned so as to serve for fixing the measuring insert inside the protective tube in a state in which the measuring insert is introduced into the protective tube.

In one preferred embodiment the second section, in particular the base body and/or the coupling element, is at least partially composed of a thermally conductive material. The gap between the walls of the measuring insert and protective tube without a measuring insert as provided by the present invention is usually filled by air which is a poor heat conductor. The second section at least partially reduces or minimizes this gap. By providing the second section at least partially being composed by a metallic material, an increased response time and improved heat transfer can be achieved leading to enhanced measurement accuracy.

The second section may further be further provided with certain dimensions or geometries which are chosen so as to improve heat transfer, mechanical stability and/or reducing vibrations.

One example comprises that the coupling element provided in the second section of the measuring insert comprises a first and a second component, the first component being at least partially rigid and the second component at least partially being elastic. Additionally, the two components can further have different thermal conductivities and/or thermal expansion coefficients. The rigid component serves for mechanical stabilization and the second component improves the fitting of the measuring insert inside the protective tube. Providing a coupling element made of two components thus improves the fitting performance of the measuring insert inside the protective tube.

In one embodiment the coupling element comprises at least one at least partially elastic and/or deformable element. The elastic and/or deformable element can be the second component of the previously described example or any other element or component of the coupling element.

In this regard, it is of advantage, if the at least one at least partially elastic and/or deformable element is a, in particular metallic, mesh or a metallic foam.

It is further of advantage, if the at least one at least partially elastic and/or deformable element is a, in particular metallic, spring element.

The coupling element can also comprise a, in particular metallic, mesh or a metallic foam and a, in particular metallic, spring element.

With respect to the spring element, it is of advantage, if the spring element is embodied such that a spring travel of the spring element is perpendicular to a longitudinal axis of the measuring insert.

It is further of advantage, if the spring element comprises a plurality of outward curved bars and at least one ring-shaped connection element, to which the plurality of bars is connected, in particular wherein the bars are evenly distributed around the circumference of the connection element.

In another example the coupling element further comprises a filling material, especially a powder at least partially comprising carbon, in particular a graphite powder, or a paste. The powder or the paste might preferably be added to the, in particular metallic, mesh or metallic foam, or to the spring element. The powder or paste serves to fill remaining gaps in an area of the coupling element. If the coupling element comprises at least one at least partially elastic and/or deformable element, it becomes possible to fill gaps while maintaining elasticity.

The coupling element can be detachably or fixedly connected to the tubular base body. Preferably, the coupling element is fastened to the tubular base body by means of a force-fit and/or form-fit connection. For instance, the coupling element can be fastened to the tubular base body by means of a braze or a solder connection. Alternatively, it is also of advantage, if the coupling element and/or the tubular base body comprise/s fastening means for fastening the coupling element to the tubular base body.

According to the claimed invention, the coupling element might comprise at least one ring element having an inner diameter corresponding to an outer diameter of the tubular base body. The tubular base body in turn comprises at least one section parallel to a longitudinal axis of the base body with reduced diameter in which the coupling element is arranged. The base body especially has at least one shoulder in an outer wall parallel to its longitudinal axis which shoulder serves to fasten the coupling element on the base body. The base body may further comprise fastening means for fixedly or detachably fastening the base body to the first section of the elongated tubular member.

The object underlying the present invention is also achieved by means of an apparatus for determining and/or monitoring a temperature of a medium in a vessel or pipe comprising a measuring insert according to the present invention.

The thermometer may further comprise a measuring transducer which may be arranged with the measuring insert, or separately from the measuring insert. The transducer preferably serves for processing at least the temperature of the medium determined by the measuring insert.

In the following, the present invention will be explained in greater detail based on the drawings presented in Figs. 1-4.
Fig. 1 shows a thermometer comprising a measuring insert and a protective tube according to the state of the art,
Fig. 2 shows first examples of a measuring insert with a coupling element comprising an elastic and/or deformable element in the form of a foam,
Fig. 3 shows an example and an embodiment according to the claimed invention of a measuring insert with a coupling element comprising an elastic and/or deformable element in the form of a spring element,
Fig. 4 shows several preferred embodiments of a spring element, and
Fig. 5 shows an embodiment with a coupling element comprising a spring element and a mesh.

In the figures, identical elements are always provided with the same reference sign.

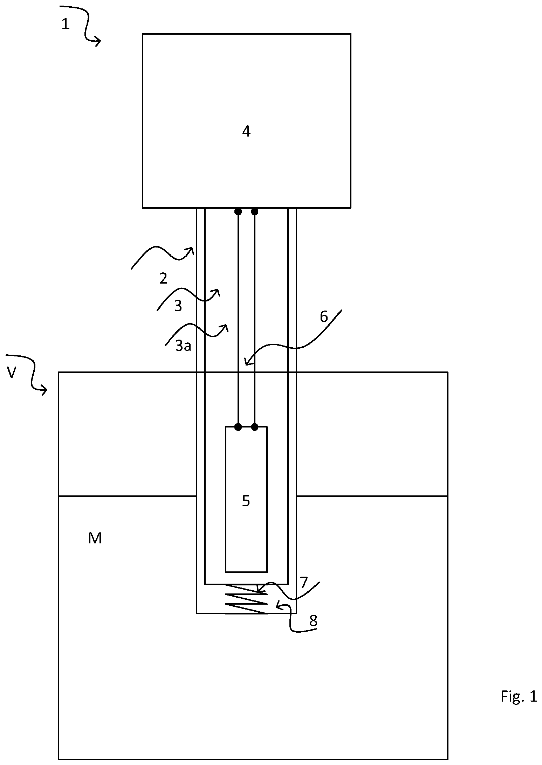

Fig.1 shows a schematic diagram of a state of the art thermometer 1 for determining the temperature T of a medium M in a vessel V, the thermometer 1 comprising a protective tube 2, a measuring insert 3 and electronics 4. The measuring insert 3 is inserted into the protective tube 2 and comprises an elongated tube 3a in which temperature sensor 5, here in the form of a resistive element, is arranged. The temperature sensor 5 is electrically contacted via the connection lines 6 and connected to the electronics 4. In other embodiments, the electronics 4 can also be arranged separately from the measuring insert 3 and protective tube 2. Also, the temperature sensor 5 does not necessarily need to be a resistive element, or the number of connecting lines 6 used need not necessarily be two. Rather, a different number of connecting lines 6 can be used depending on the measuring principle applied.

In order to improve thermal contacting a spring element 7 is frequently arranged inside the protective tube 2 and/or a paste 8 is provided in the inner volume V of the thermowell 2. However, that way only insufficient mechanical stability and thermal contacting is achieved. Typically, air gaps between an inner wall of the thermowell 2 and an outer wall of the measuring insert 3 are not sufficiently minimized. This results in higher response times of the thermometer 3, less mechanical stability and a certain sensitivity towards vibrations.

The present invention addresses these problems by providing a measuring insert 3 with an elongated tubular member 9 comprising a first 9a and a second section 9b, the second section 9b being an end section of the tubular member 9. The temperature sensor 5 is arranged in an inner volume of the second section 9b of the elongated tubular member 9.

The second section 9b comprises a tubular base body 10, which base body 10 is connectable to the first section 9a of the elongated tubular member 9 in a first end region, e.g. by means of a force-fit and/or form-fit connection. The second section 9b is at least partially embodied and/or dimensioned so as to serve for fixing the measuring insert 3 inside the protective tube 2 in a state in which the measuring insert 3 is introduced into the protective tube 2. That way, mechanical stability of the thermometer 1 can be improved and furthermore, a sensitivity of the thermometer 1 against mechanical vibrations becomes reduced.

Preferably, the coupling element 11 and/or the base body 10 is/are at least partially composed of a thermally conductive material, e.g. a metal. This in turn results in an improved performance of the thermometer 1. In particular, a response time of the thermometer 1 in reaction of a change of the temperature T of the medium M is significantly reduced.

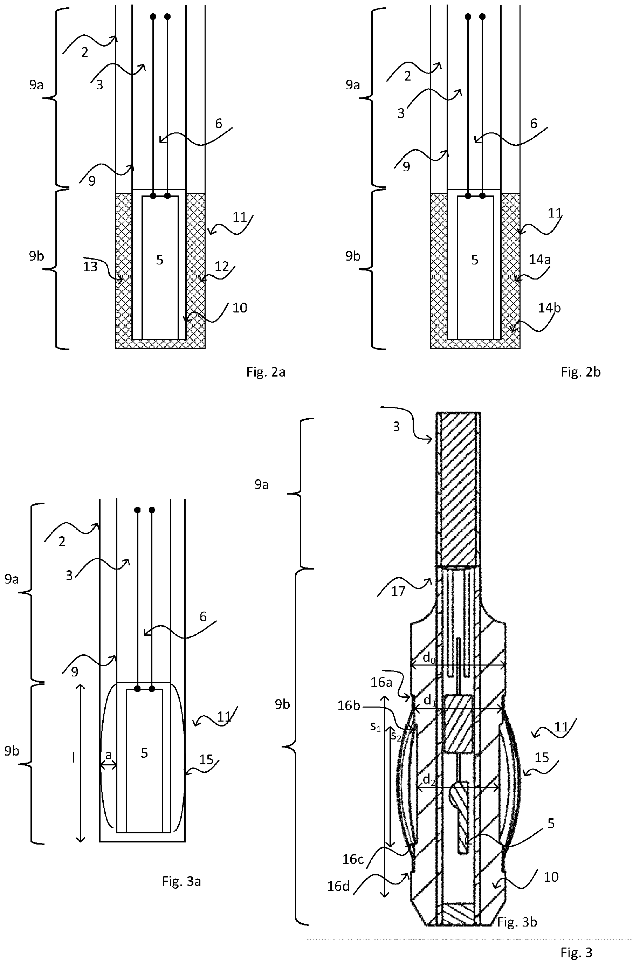

In case of the example shown in Fig. 2a, the second section 9b comprises a coupling element 11 embodied and/or dimensioned so as to serve for fixing the measuring insert 3 inside the protective tube 2 when inserted into it. The coupling element 11 here comprises at least one at least partially elastic and/or deformable element in the form of a, especially metallic, foam 12 attached to the base body 10. The coupling element 11 may further comprise a filling material 13 filled into remaining gaps in the foam 12. Alternatively, the elastic and/or deformable element can also be a, especially metallic, mesh.

The tubular base body 10 has an overall cylindrical shape with an internal bore adapted to the dimensions of the first section 9a. However, also other examples of the base body 10 are feasible. For instance, the base body 10 may have varying thickness, different geometries and/or different dimensions from one embodiment to the other.

As illustrated in Fig. 2b, the coupling element 11 may further also comprise at least two different components 14 serving different purposes, e.g. one rigid component 14a and one elastic component 14b. Preferably, the coupling element 11 is embodied such that the second, elastic component 14b is provided by the elastic and/or deformable element, e.g. a foam or mesh, and the first component 14a e.g. in the form of a rigid frame.

Examples for preferred materials for the coupling element 11 are stainless steel, copper, brass, aluminum or others.

In case of Fig. 3a, the at least partially elastic and/or deformable element is a spring element 15 fastened to the tubular base body 10 by means of a form-fit connection. A spring travel a of the spring element 14 is perpendicular to a longitudinal axis of the measuring insert 3.

In case of Fig. 3b the base body 10 also has a cylindrical shape with an internal bore having a bore diameter corresponding to an outer diameter of the first section 9a. However, in contrast to the example shown in Fig. 3a, the outer diameter d of the base body 10 varies along the longitudinal axis of the elongated tubular member 9. The outer wall of the base body 10 comprises several shoulders 16a-16d. The diameter d₀ of the tubular base body 10 is further reduced to a first reduced diameter d₁ in a first section s₁ defined by the shoulders 16a and 16d and further reduced to a second reduced diameter d₂ in a second section s₂ defined by shoulders 16b and 16c.

Spring element 15 is clamped or fastened on the base body 10 in the second section s₂ between shoulders 16b and 16c. By providing several sections s with varying diameter d for the base body 10, different spring elements 15 can be provided for the same measuring insert 3 for different applications and geometries.

It shall be noted that the base body 10 may further comprise fastening means 17 for fastening the base body 10 to the measuring insert 3. Here, the fastening means 17 are provided by an end section of the base body 10 to be connected to the first section 9a of the elongated tubular member 9, having a reduced wall thickness serving to establish a force-fit or form-fit connection with the first section 9a.

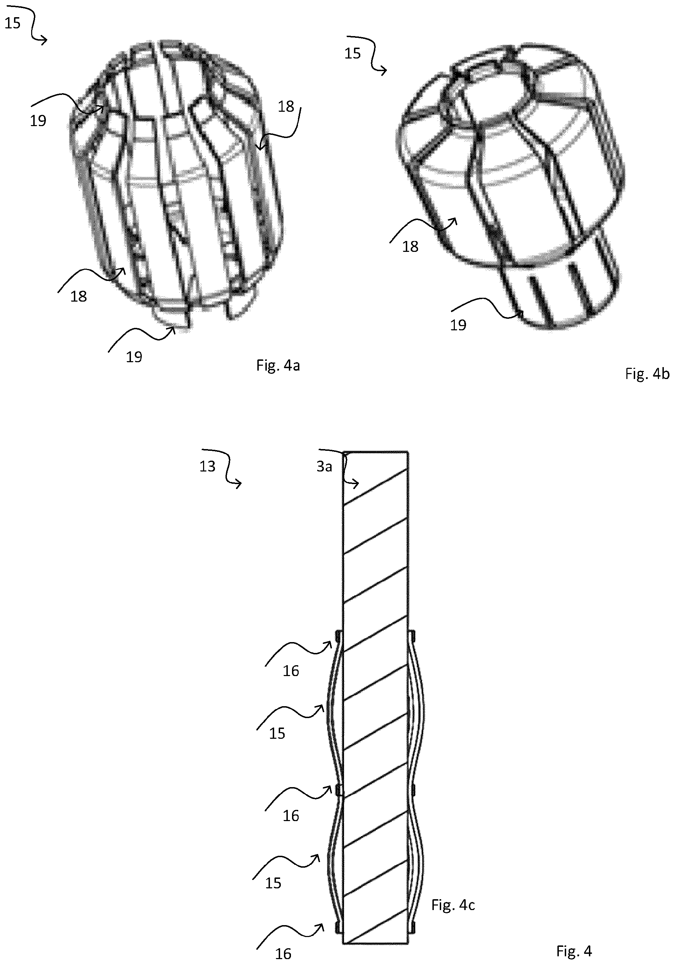

Several additional embodiments for a coupling element 11 comprising a spring element 15 are subject to Fig. 4. The spring element 15 shown in Fig. 4a comprises a plurality of outward curved bars 18 and two ring-shaped connection elements 19. The bars 18 are clamped and fastened between the two connecting elements 19, and evenly distributed around the circumference of the connecting elements 19. The quantity of bars 18 as well as their dimensions, e.g. length and width, can vary from one embodiment to another. For instance, in case of the spring element 15 shown in Fig. 4b, the number of bars 18 provided is less as in case of Fig. 4a, but the width of each bar 19 is larger. Moreover, while two connection elements 19 are provided for the embodiment shown in Fig. 4a, the one shown in Fig. 4b comprises one connecting element 19. Another embodiment of a spring element 15 is subject to Fig. 4c.

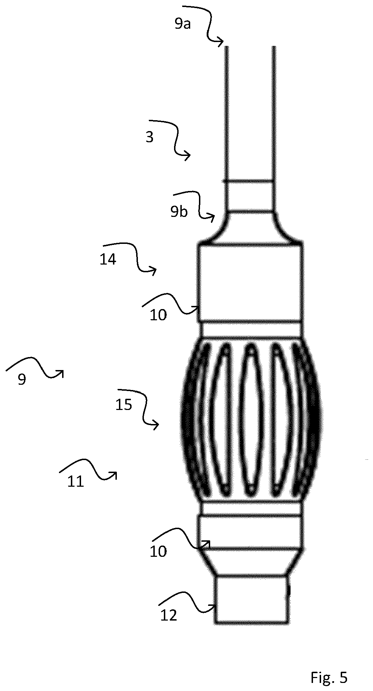

Another preferred embodiment is presented in Fig. 5. The second section 9b comprises a base body 10 and a coupling element 11 with a spring element 13 similar as in case of the embodiment shown in Fig. 3b. Moreover, a mesh 12 is provided at the tip of the elongated tube 3a. That way, the coupling element 11 comprises a mesh 12 and a spring element 15. Alternatively, a metallic foam can be provided instead of the mesh 12.

### Reference symbols

- 1: Thermometer
- 2: Protective tube
- 3: Measuring insert
- 4: electronics
- 5: temperature sensor
- 6: connecting lines
- 7: Spring element (state of the art)
- 8: paste
- 9: elongated tubular member with two sections (9a, 9b)
- 10: tubular base body
- 11: coupling element
- 12: Elastic and/or deformable element in the form of a mesh or foam
- 13: Filling material
- 14: 14a, 14b two components of coupling element
- 15: Elastic and/or deformable element in the form of a spring element
- 16: 16a-16d shoulders in outer wall of the base body
- 17: Fastening means
- 18: Bars of the spring element
- 19: Connecting elements of the spring element

- M: Medium
- V: vessel
- T: Temperature
- a: Spring travel Longitudinal axis of elongated tube

## Claims

1. Measuring insert (3) for determining and/or monitoring a temperature (T) of a medium (M) in a vessel (V) or pipe, which can be inserted into a protective tube (2) for accommodating the measuring insert (3), the protective tube (2) at least partially protruding into an inner volume of the vessel (V) or pipe,
the measuring insert (3) comprising
an elongated tubular member (9) comprising a first section (9a) and a second section (9b), and
at least one temperature sensor (5) located in an inner volume of the second section (9b),
wherein the second section (9b) comprises a tubular base body (10) and wherein the base body (10) is connected to the first section (9a) of the elongated tubular member (9),
wherein the second section (9b) is at least partially embodied and/or dimensioned so as to serve for fixing the measuring insert (3) inside the protective tube (2) in a state in which the measuring insert (3) is introduced into the protective tube (2),
wherein the second section (9b) comprises a coupling element (11) arranged on an outer surface of the tubular base body (10), wherein the coupling element (11) comprises a spring element (15) as a first at least partially elastic and/or deformable element,
wherein the coupling element (11) comprises at least one ring element having an inner diameter corresponding to an outer diameter of the tubular base body (10) and the tubular base body (10) comprises at least one section (s1; s2) extending parallel to a longitudinal axis of the base body (10),
in which section (s1; s2) the diameter is reduced and in which section (s1; s2) the coupling element (11) is arranged.

2. Measuring insert according to claim 1,
wherein the second section (9b), in particular the base body (10) and/or
the coupling element (11), is at least partially composed of a thermally conductive material.

3. Measuring (3) insert according to claim 1 or 2, wherein the coupling element (11) is a, in particular metallic, mesh or a metallic foam as a second at least partially elastic and/or deformable element (12).

4. Measuring insert (3) according to claim 1 or 3, wherein spring element (15) is metallic.

5. Measuring insert (3) according to claim 1 or 4, wherein the spring element (15) is embodied such that a spring travel (a) of the spring element (15) is perpendicular to a longitudinal axis (I) of the measuring insert (3).

6. Measuring insert (3) according to claim 1 or 5, wherein the spring element (15) comprises a plurality of outward curved bars (18) and at least one ring-shaped connection element (19), to which the plurality of bars (18) is connected, in particular wherein the bars (18) are evenly distributed around the circumference of the connection element (19).

7. Measuring insert (3) according to any of the preceding claims, wherein the coupling element (11) is fastened to the tubular base body (10) by means of a force-fit and/or form-fit connection, in particular, wherein the coupling element (11) is fastened to the tubular base body (10) by means of a braze or a solder connection or wherein the coupling element (11) and/or the tubular base body (10) comprise/s fastening means (17) for fastening the coupling element (11) to the tubular base body (10).

8. Apparatus (1) for determining and/or monitoring a temperature (T) of a medium (M) in a vessel (V) or pipe comprising a measuring insert (3) according to any of the preceding claims.

## Patentansprüche

1. Messeinsatz (3) zur Bestimmung und/oder Beobachtung einer Temperatur (T) eines Mediums (M) in einem Behälter (V) oder Rohr, der in einen Schutztubus (2) für die Aufnahme des Messeinsatzes (3) eingeführt werden kann, wobei der Schutztubus (2) mindestens teilweise in ein Innenvolumen des Behälters (V) oder Rohrs vorragt,
wobei der Messeinsatz (3)
ein längliches tubulares Element (9), das einen ersten Abschnitt (9a) und einen zweiten Abschnitt (9b) umfasst, und
mindestens einen Temperaturfühler (5) in einem Innenvolumen des zweiten Abschnitts (9b) umfasst,
wobei der zweite Abschnitt (9b) einen tubularen Grundkörper (10) umfasst und wobei der Grundkörper (10) mit dem ersten Abschnitt (9a) des länglichen tubularen Elements (9) verbunden ist,
wobei der zweite Abschnitt (9b) mindestens teilweise integriert oder bemessen ist, sodass er zur Befestigung des Messeinsatzes (3) im Schutztubus (2) in einem Zustand dient, in dem der Messeinsatz (3) in den Schutztubus (2) eingeführt ist,
wobei der zweite Abschnitt (9b) ein Kupplungselement (11) umfasst, das an einer Außenfläche des tubularen Grundkörpers (10) angeordnet ist, wobei das Kupplungselement (11) ein Federelement (15) als ein erstes mindestens teilweise elastisches und/oder verformbares Element umfasst,
wobei das Kupplungselement (11) mindestens ein Ringelement umfasst, das einen Innendurchmesser aufweist, der einem Außendurchmesser des tubularen Grundkörpers (10) entspricht, und der tubulare Grundkörper (10) mindestens einen Abschnitt (s1; s2) umfasst, der sich parallel zu einer Längsachse des Grundkörpers (10) erstreckt,
wobei der Durchmesser in diesem Abschnitt (s1 ; s2) verringert ist und in diesem Abschnitt (s1; s2) das Kupplungselement (11) angeordnet ist.

2. Messeinsatz nach Anspruch 1,
wobei der zweite Abschnitt (9b), insbesondere der Grundkörper (10) und/oder das Kupplungselement (11), mindestens teilweise aus einem thermisch leitfähigen Material besteht.

3. Messelement (3) nach Anspruch 1 oder 2,
wobei das Kupplungselement (11) ein, insbesondere metallisches, Sieb oder ein Metallschaum als ein zweites mindestens elastisches und/oder verformbares Element (12) ist.

4. Messeinsatz (3) nach Anspruch 1 oder 3,
wobei das Federelement (15) aus Metall besteht.

5. Messeinsatz (3) nach Anspruch 1 oder 4,
wobei das Federelement (15) so integriert ist, dass ein Federweg (a) des Federelements (15) senkrecht zu einer Längsachse (I) des Messeinsatzes (3) ist.

6. Messeinsatz (3) nach Anspruch 1 oder 5,
wobei das Federelement (15) eine Mehrheit an nach außen gebogenen Stangen (18) und mindestens ein ringförmiges Verbindungselement (19) umfasst, mit dem die Mehrheit an Stangen (18) verbunden ist, insbesondere wobei die Stangen (18) gleichmäßig um den Umfang des Verbindungselements (19) verteilt sind.

7. Messeinsatz (3) nach einem der vorhergehenden Ansprüche,
wobei das Kupplungselement (11) am tubularen Grundkörper (10) mittels einer kraftschlüssigen und/oder formschlüssigen Verbindung befestigt ist, insbesondere wobei das Kupplungselement (11) am tubularen Grundkörper (10) mittels einer Hartlöt- oder einer Lötverbindung befestigt ist oder wobei das Kupplungselement (11) und/oder der tubulare Grundkörper (10) Befestigungsmittel zur Befestigung des Kupplungselements (11) am tubularen Grundkörper (10) umfasst.

8. Vorrichtung zur Bestimmung und/oder Überwachung einer Temperatur (T) eines Mediums (M) in einem Behälter (V) oder Rohr, umfassend einen Messeinsatz (3) nach einem der vorhergehenden Ansprüche.

## Revendications

1. Insert de mesure (3) destiné à la détermination et/ou à la surveillance d'une température (T) d'un produit (M) dans un réservoir (V) ou une conduite, lequel insert peut être inséré dans un tube de protection (2), lequel tube est destiné au logement de l'insert de mesure (3), le tube de protection (2) faisant au moins partiellement saillie dans un volume intérieur du réservoir (V) ou de la conduite, l'insert de mesure (3) comprenant
un élément tubulaire allongé (9) comprenant une première section (9a) et une deuxième section (9b), et
au moins un capteur de température (5) situé dans un volume intérieur de la deuxième section (9b),
la deuxième section (9b) comprenant un corps de base tubulaire (10) et le corps de base (10) étant relié à la première section (9a) de l'élément tubulaire allongé (9),
la deuxième section (9b) étant au moins partiellement conçue et/ou dimensionnée de manière à servir à la fixation de l'insert de mesure (3) à l'intérieur du tube de protection (2) dans un état dans lequel l'insert de mesure (3) est introduit dans le tube de protection (2),
la deuxième section (9b) comprenant un élément de couplage (11) disposé sur une surface extérieure du corps de base tubulaire (10),
l'élément de couplage (11) comprenant un élément de ressort (15) en tant que premier élément au moins partiellement élastique et/ou déformable,
l'élément de couplage (11) comprenant au moins un élément annulaire présentant un diamètre intérieur correspondant à un diamètre extérieur du corps de base tubulaire (10) et le corps de base tubulaire (10) comprenant au moins une section (s1 ; s2) s'étendant parallèlement à un axe longitudinal du corps de base (10), section (s1 ; s2) dans laquelle le diamètre est réduit et section (s1 ; s2) dans laquelle l'élément de couplage (11) est disposé.

2. Insert de mesure (3) selon la revendication 1,
pour lequel la deuxième section (9b), notamment le corps de base (10) et/ou l'élément de couplage (11), est au moins partiellement composée d'un matériau thermoconducteur.

3. Insert de mesure (3) selon la revendication 1 ou 2,
pour lequel l'élément de couplage (11) est une maille, notamment métallique, ou une mousse métallique comme second élément (12) au moins partiellement élastique et/ou déformable.

4. Insert de mesure (3) selon la revendication 1 ou 3,
pour lequel l'élément ressort (15) est métallique.

5. Insert de mesure (3) selon la revendication 1 ou 4,
pour lequel l'élément ressort (15) est conçu de manière à ce que la course de ressort (a) de l'élément ressort (15) est perpendiculaire à l'axe longitudinal (I) de l'insert de mesure (3).

6. Insert de mesure (3) selon la revendication 1 ou 5,
pour lequel l'élément ressort (15) comprend une pluralité de barres (18) incurvées vers l'extérieur et au moins un élément de raccordement (19) en forme d'anneau, élément auquel la pluralité de barres (18) est raccordée, les barres (18) étant notamment réparties uniformément sur la circonférence de l'élément de raccordement (19).

7. Insert de mesure (3) selon l'une des revendications précédentes,
pour lequel l'élément de couplage (11) est fixé au corps de base tubulaire (10) au moyen d'une liaison par force et/ou par forme, l'élément de couplage (11) étant notamment fixé au corps de base tubulaire (10) au moyen d'une liaison par brasure ou par soudure, ou l'élément de couplage (11) et/ou le corps de base tubulaire (10) comprenant des moyens de fixation (17) pour fixer l'élément de couplage (11) au corps de base tubulaire (10).

8. Appareil (1) destiné à la détermination et/ou à la surveillance d'une température (T) d'un produit (M) dans un réservoir (V) ou une conduite, lequel appareil comprend un insert de mesure (3) selon l'une des revendications précédentes.
